# EUROPEAN PATENT SPECIFICATION

(11) **EP 3 555 234 B1**
(45) Date of publication and mention of the grant of the patent: **02.09.2020**
(21) Application number: 17809098.1
(22) Date of filing: 09.11.2017
(51) Int. Cl.: C10G 11/18, C10G 3/00

(54) **METHOD FOR OXYGENATE CONVERSION IN A FLUID CATALYTIC CRACKER**
METHODE ZUR UMSETZUNG VON OXYGENATEN IN EINEM FLUID-KATALYTISCHEN SPALTREAKTOR
PROCÉDÉ DE CONVERSION D'UN OXYGÉNAT EN CRAQUEUR CATALYTIQUE FLUIDE

(30) Priority: 14.12.2016 US 201662433826 P
(43) Date of publication of application: 23.10.2019
(73) Proprietor: ExxonMobil Research and Engineering Company, Annandale, NJ 08801-0900 (US)
(72) Inventor: McCARTHY, Stephen, J., Center Valley, PA 18034 (US); BILLIMORIA, Rustom, M., Hellertown, PA 18055 (US); O'NEILL, Brandon, J., Lebanon, NJ 08833 (US); MHADESHWAR, Ashish, B., Garnet Valley, PA 19060 (US); JALAN, Amrit, Bridgewater, NJ 08807 (US)
(74) Representative: ExxonMobil Chemical Europe Inc.
(86) International application number: PCT/US2017/060815
(87) International publication number: WO 2018/111456

(56) References cited:
- US-A1- 2014 275 675
- US-A1- 2015 136 647
- OSHITANI J ET AL: "The influence of the density of a gas-solid fluidized bed on the dry dense medium separation of lump iron ore", MINERALS ENGINEERING, PERGAMON PRESS , OXFORD, GB, vol. 24, no. 1, 1 January 2011 (2011-01-01), pages 70-76, XP027495261, ISSN: 0892-6875, DOI: 10.1016/J.MINENG.2010.10.010 [retrieved on 2010-11-15]
- SHUYU PAN ET AL: "Feeding Methanol in an FCC Unit", PETROLEUM SCIENCE AND TECHNOLOGY, vol. 26, no. 2, 30 January 2008 (2008-01-30), pages 170-180, XP055441934, US ISSN: 1091-6466, DOI: 10.1080/10916460600805152 cited in the application

## Description

### FIELD

The invention is directed to methods and apparatus for converting oxygenate in a fluid catalytic cracking unit.

### BACKGROUND

Between 40% to 60% of the earth's proven natural gas reserves are either too small or too remote to be economically delivered to market. Such reserves are referred to as "stranded." Natural gas conversion to oxygenates, such as methanol, is a mature and widely-used technology. Oxygenates can then be converted to olefins, such as ethylene and propylene. Commercial plants for converting methanol to gasoline or light olefins have operated in New Zealand and China. However, methanol conversion processes currently require large capital investments and association with mega-fields of natural gas reserves.

Because of the economic challenges surrounding methanol to olefins (MTO) conversion, stranded gas has conventionally not been an economically feasible candidate. It would, however, be advantageous to be able to perform MTO using a pre-existing piece of refinery equipment. The fluid catalytic cracking (FCC) unit present in many refineries operates under conditions similar to those required for MTO. The FCC unit is typically used to upgrade vacuum gasoil and heavy gasoil to olefins, light gasoil, and gasoline. Pan et al. contemplated feeding methanol into an FCC unit to produce olefins at four different points-the bottom of the riser before feeding the gasoil, co-feeding gasoil and methanol, feeding methanol at the top of the riser, and feeding methanol in the stripper and disengage zone. *See* Shuyu Pan et al., Feeding Methanol in an FCC Unit, 26 PETRO. SCI. & TECH. 170 (2008).

US2014/275675 describes a dual riser fluid catalytic cracking process, in which in a first riser hydrocarbon is cracked and in a second riser a hydrocarbon oxygenate is cracked.

The issue with this approach is that olefin production is not maximized. By using a single riser, olefin production is limited by reaction conditions that are optimal for the conventional FCC reaction process. It is proposed herein to use a dedicated MTO riser within the FCC unit in addition to a riser for gasoil. The dual riser configuration will allow to optimize olefin production from the oxygenate feed in the MTO riser.

### SUMMARY

Provided herein are dual riser fluid catalytic cracking processes as defined in claim 1. The processes comprise cracking a hydrocarbon feed in a first riser comprising a first catalyst under first riser conditions to form a first effluent enriched in olefins, light gasoil, gasoline, or a combination thereof; cracking a hydrocarbon oxygenate feed in a second riser comprising a second catalyst under second riser conditions to form a second effluent enriched in olefins; recovering the first and second catalyst from the first and second effluents in a common reactor; regenerating the recovered first and second catalyst in a regenerator using heat from the exothermic cracking of the hydrocarbon oxygenate feed; and recirculating the regenerated first and second catalyst to the first and second riser.

In one aspect, the second riser conditions include a catalyst activity, α, of about 5 to 130, e.g. about 10. In another aspect, the second riser conditions include a weight hourly space velocity (WHSV) of about 1-150 h⁻¹, e.g. about 10-100 h⁻¹ or about 20-85 h⁻¹. In yet another aspect, the second riser conditions include a temperature of about 538-760 °C. The second riser conditions may also include a combination of the catalyst activity, WHSV, and temperatures state above.

In certain aspects, the first and second catalysts can be the same or different. When the first catalyst and the second catalyst are different, the first catalyst can be a USY catalyst and the second catalyst is ZSM-5, ZSM-11, ZSM-48, or a combination thereof. According to the invention, the first catalyst and the second catalysts have different densities such that they form a layer of first catalyst and a layer of second catalyst in the regenerator; wherein recirculating the regenerated first and second catalyst to the first and second riser further comprises positioning a first riser standpipe to recirculate regenerated first catalyst to the first riser from the layer of first catalyst; and positioning a second riser standpipe to recirculate a regenerated second catalyst to the second riser from the layer of second catalyst.

### BRIEF DESCRIPTION OF THE DRAWINGS

Figure 1 schematically illustrates a dual riser FCC process and apparatus according to embodiments of the invention.
Figure 2 depicts model predictions of methanol to olefin conversion based on different introduction points within a FCC unit.

### DETAILED DESCRIPTION

As used herein references to a "reactor," "reaction vessel," and the like shall be understood to include both distinct reactors as well as reaction zones within a single reactor apparatus. In other words and as is common, a single reactor may have multiple reaction zones. Where the description refers to a first and second reactor, the person of ordinary skill in the art will readily recognize such reference includes a single reactor having first and second reaction zones. Likewise, a first reactor effluent and a second reactor effluent will be recognized to include the effluent from the first reaction zone and the second reaction zone of a single reactor, respectively.

As used herein the phrase "at least a portion of' means > 0 to 100 wt% of the process stream or composition to which the phrase refers. The phrase "at least a portion of' refers to an amount ≤ about 1 wt%, ≤ about 2 wt%, ≤ about 5 wt%, ≤ about 10 wt%, ≤ about 20 wt%, ≤ about 25 wt%, ≤ about 30 wt%, ≤ about 40 wt%, ≤ about 50 wt%, ≤ about 60 wt%, ≤ about 70 wt%, ≤ about 75 wt%, ≤ about 80 wt%, ≤ about 90 wt%, ≤ about 95 wt%, ≤ about 98 wt%, ≤ about 99 wt%, or ≤ about 100 wt%. Additionally or alternatively, the phrase "at least a portion of' refers to an amount ≥ about 1 wt%, ≥ about 2 wt%, ≥ about 5 wt%, ≥ about 10 wt%, ≥ about 20 wt%, ≥ about 25 wt%, ≥ about 30 wt%, ≥ about 40 wt%, ≥ about 50 wt%, ≥ about 60 wt%, ≥ about 70 wt%, ≥ about 75 wt%, ≥ about 80 wt%, ≥ about 90 wt%, ≥ about 95 wt%, ≥ about 98 wt%, or ≥ about 99 wt%. Ranges expressly disclosed include all combinations of any of the above-enumerated values; e.g., ∼10 wt% to ∼100 wt%, ∼10 wt% to ∼98 wt%, ∼2 wt% to ∼10 wt%, ∼40 wt to ∼60 wt%, etc.

As used herein the term "oxygenate," "oxygenate composition," and the like refer to oxygen-containing compounds and mixtures of oxygen-containing compounds that have 1 to about 50 carbon atoms, 1 to about 20 carbon atoms, 1 to about 10 carbon atoms, or 1 to 4 carbon atoms. Exemplary oxygenates include alcohols, ethers, carbonyl compounds, e.g., aldehydes, ketones and carboxylic acids, and mixtures thereof. Particular oxygenates methanol, ethanol, dimethyl ether, diethyl ether, methylethyl ether, di-isopropyl ether, dimethyl carbonate, dimethyl ketone, formaldehyde, and acetic acid.

In any aspect, the oxygenate comprises one or more alcohols, preferably alcohols having 1 to about 20 carbon atoms, 1 to about 10 carbon atoms, or 1 to 4 carbon atoms. The alcohols useful as first mixtures may be linear or branched, substituted or unsubstituted aliphatic alcohols and their unsaturated counterparts. Non-limiting examples of such alcohols include methanol, ethanol, propanols (e.g., n-propanol, isopropanol), butanols (e.g., n-butanol, sec-butanol, tert-butyl alcohol), pentanols, hexanols, etc., and mixtures thereof. In any aspect described herein, the first mixture may be one or more of methanol, and/or ethanol, particularly methanol. In any aspect, the first mixture may be methanol and dimethyl ether.

The oxygenate, particularly where the oxygenate comprises an alcohol (e.g., methanol), may optionally be subjected to dehydration, e.g., catalytic dehydration over e.g., γ-alumina. Further optionally, at least a portion of any methanol and/or water remaining in the first mixture after catalytic dehydration may be separated from the first mixture. If desired, such catalytic dehydration may be used to reduce the water content of reactor effluent before it enters a subsequent reactor or reaction zone, e.g., second and/or third reactors as discussed below.

Reference will now be made to various aspects and embodiments of the disclosed subject matter in view of the definitions above. Reference to the systems will be made in conjunction with, and understood from, the method disclosed herein.

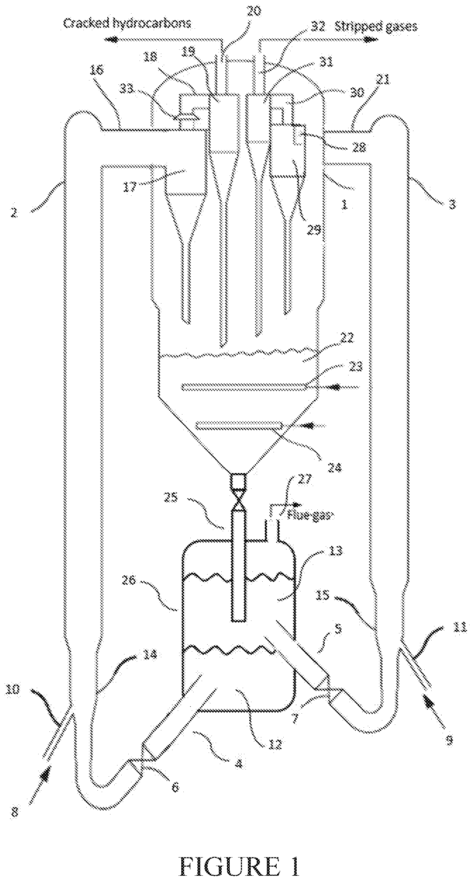

Figure 1 is simplified outline of a dual external riser FCC unit. The unit comprises a reactor 1 with a first riser 2 and a second riser 3 connected to the foot of the reactor by means of regenerated catalyst standpipes 4 and 5 fitted with slide valves 6 and 7, respectively, to control the flow of catalyst in the normal way. In Figure 1, first riser 2 is designed to receive a hydrocarbon feed 8, such as a heavy gasoil feed, light gasoil feed, light olefin feed, etc. with any recycle through feed inlet 10 to meet a hot, regenerated first catalyst 12 in mixing zone 14. The mix of cracked products and catalyst passes from the top of first riser 2 through transfer duct 16 into the primary reactor cyclone 17 in which the majority of the spent catalyst is separated from the cracked hydrocarbon vapors which then pass by way of duct 18 to the secondary reactor cyclone 19. For purposes of illustration, Figure 1 only shows one primary reactor cyclone and one secondary reactor cyclone, however, an external riser reactor will generally have multiple first stage and second stage cyclones in a reactor. Finally, the cracked hydrocarbon vapors leave the reactor cyclones through duct 20 to pass to the main column flash zone.

Second riser 3 is designed to receive an oxygenate feed 9, such as methanol, through feed inlet 11 to meet a hot, regenerated second catalyst 13 in mixing zone 15. The mix of cracked products, mostly olefins, and catalyst passes through the top of riser 3 through transfer duct 21 into a reactor cyclone scheme (not shown) as described above with respect to the heavy oil feed.

The separated catalyst passes down the diplegs of cyclones 17 and 19 directly into a bed of catalyst 22 in the stripper section of the reactor vessel where it is met by a stream of stripping gas from plate sparger 23. The stripping gas leaving the sparger 23 will typically comprise steam. As the stripping gas ascends through the bed of catalyst, which is maintained in a fluidized state by its passage, its composition will change to comprise varying amounts of flue gas components (i.e. CO, CO₂, H₂O, and O₂), as contaminants are stripped from the catalysts. The composition will change with the height of the bed with the proportion of the carbon oxides and water increasing with height in the bed. Steam or nitrogen is admitted through a lower sparger 24 as displacement gas to ensure that the stripping gas passes up through the catalyst rather than passing down the standpipe 25 to the regenerator 26.

Stripped first catalyst 12 and second catalyst 13 are then transported via standpipe 25 to regenerator 26. A combustion reaction to burn off any remaining coke on the catalysts is initiated. The combustion products pass upwards in the regenerator 26 and out duct 27.The descending stream of catalysts is heated by the heat from the combustion reactions taking place lower down in the regenerator 26. Additionally and/or alternatively, because the conversion of methanol to olefins is exothermic, in certain aspects at least a portion of heat from that reaction can be used to aid in regeneration of spent catalyst. Heat can be transferred from second riser 3 to regenerator 26 by any convenient means such as an air duct or heat pipe.

The stripper gases comprising stripped hydrocarbon vapors pass upwards from the stripping bed and leave the reactor vessel by way of inlet 28 to the primary stripper cyclone 29. The gases separated in cyclone 29 then pass through transfer duct 30 to secondary stripper cyclone 31 and finally out of the reactor vessel by way of duct 32 leading to the fuel gas system. The stripper off gases may alternatively or in addition be removed from the reactor by way of vent 33 in the outlet duct of the primary reactor cyclone. Catalyst entrained in the stripper vapors is separated in the stripper cyclones 29 and 31 and then passes down through the diplegs of these cyclones to be returned to the spent catalyst bed 22 underneath. The stripper overhead vapor and riser effluent can utilize the same set of cyclones and only one stream will be leaving as the reaction section product to the main column.

For purposes of illustration, not limitation, the first catalyst can be any catalyst suitable for conventional FCC operations. Such catalysts can include catalysts based on large pore size framework structures 20 (12-member rings) such as the synthetic faujasites, especially zeolite Y, such as in the form of zeolite USY. Zeolite beta may also be used as the zeolite component. Other materials of acidic functionality which may be used in the catalyst include the materials identified as MCM-36 and MCM-49. Still other materials can include other types of molecular sieves having suitable framework structures, such as silicoaluminophosphates (SAPOs), aluminosilicates having other heteroatoms in the framework structure, such as Ga, Sn, or Zn, or silicoaluminophosphates having other heteroatoms in the framework structure. Mordenite or other solid acid catalysts can also be used as the catalyst.

The second catalyst will typically comprise a zeolite catalyst. A suitable zeolite can include a 10-member or 12-member ring pore channel network, such as a 1-dimensional 10-member ring pore channel or a 3-dimensional 10-member ring pore channel. Examples of suitable zeolites having a 3-dimensional 10-member ring pore channel network include zeolites having an MFI or MEL framework, such as ZSM-5 or ZSM-11. ZSM-5 is described in detail in U.S. Patent Nos. 3,702,886 and Re. 29,948. ZSM-11 is described in detail in U.S. Patent No. 3,709,979. Preferably, the zeolite is ZSM-5. Examples of suitable zeolites having a 1-dimensional 10-member ring pore channel network include zeolites having a MRE (ZSM-48), MTW, TON, MTT, and/or MFS framework. In some aspects, a zeolite with a 3-dimensional pore channel can be preferred for conversion of methanol, such as a zeolite with an MFI framework.

The first and second catalysts can be the same or different. In some cases, it may be optimal to choose a first catalyst for conventional FCC operations in the first riser 2 and a different second catalyst for MTO conversion in the second riser 3. In such cases, it is necessary to separate the two catalysts from one another in regenerator 26 such that the first catalyst 12 is directed to first riser 2 through standpipe 4 and the second catalyst 13 is directed to second riser 3 through standpipe 5 As shown in Figure 1, first and second catalysts having differing densities are chosen. In this embodiment, the second catalyst 13 is less dense than the first catalyst 12. The two catalysts are permitted to naturally separate from one another based on the density differential and form two layers of catalyst-the first catalyst 12 on the bottom layer and the second catalyst 13 on the top layer. In the embodiment shown, standpipe 5 is positioned such that it draws regenerated catalyst only from the top layer of second catalyst 13. Likewise, standpipe 4 is positioned such that it draws regenerated catalyst only from the bottom layer of first catalyst 12.

It should also be noted that the configuration described above is only one configuration of external riser FCC reactor designs for which the present invention may be utilized. Here, two external risers are shown, but the second riser may also be substituted with a fluidized bed. Alternatively, in place of a second riser or fluidized bed, oxygenate may be injected directly into the dipleg of primary cyclone 17 and/or secondary cyclone 19. Although the FCC catalyst at this point would be theoretically spent for conventional FCC cracking, MTO does not require as much catalyst activity. There is sufficient activity left in the spent FCC catalyst to perform methanol to olefin conversion simply by injecting methanol into a cyclone dipleg.

### Methanol to Olefin Reaction Conditions

As noted above, embodiments of the presently disclosed subject matter include a stage in which a feed comprising an oxygenate, e.g., methanol, dimethyl ether, or a mixture thereof is introduced to an external riser of an FCC unit having a methanol conversion catalyst therein. The riser is controlled to provide conditions suitable for the catalyst to convert at least a portion of the oxygenate to an intermediate composition comprising one or more olefins having 2 or more carbon atoms, sometimes referred to as a light C₂+ olefin composition. This process is known as a MTO (methanol to olefin) reaction.

The temperature of reaction during methanol conversion may be from about ≥ about 250°C, e.g., ≥ about 275°C, ≥ about 300°C, ≥ about 330°C, ≥ about 350°C, ≥ about 375°C, ≥ about 400°C, ≥ about 425°C, to about 450°C, ≥ about 500°C, ≥ about 525°C, ≥ about 550°C, or ≥ about 575°C. Additionally or alternatively, the temperature of reaction during methanol conversion may be ≤ about 760°C, e.g., ≤ about 575°C, ≤ about 550°C, ≤ about 525°C, ≤ about 500°C, ≤ about 450°C, ≤ about 425°C, ≤ about 400°C, ≤ about 375°C, ≤ about 350°C, ≤ about 330°C, ≤ about 300°C, or ≤ about 275°C. Ranges of the temperature of reaction during methanol conversion expressly disclosed include all combinations of any of the above-enumerated values; e.g., about 250°C to about 760°C, about 275°C to about 575°C, about 330°C to about 550°C, about 350°C to about 525°C, about 375°C to about 500°C, about 400°C to about 475°C, about 425°C to about 450°C, about 400°C to about 500°C, about 425°C to about 500°C, about 450°C to about 500°C, about 475°C to about 500°C, etc. In a preferred embodiment, the temperature in the MTO riser is about 537°C to about 700°C, e.g. about 650°C or about 595°C.

The weight hourly space velocity (WHSV) of feed stock during methanol conversion may be ≥ about 0.1 hr⁻¹, e.g., ≥ about 1.0 hr⁻¹, ≥ about 10 hr⁻¹, ≥ about 50 hr⁻¹, ≥ about 100 hr⁻¹, ≥ about 200 hr⁻¹, ≥ about 300 hr⁻¹, or ≥ about 400 hr⁻¹. Additionally or alternatively, the WHSV may be ≤ about 500 hr⁻¹, e.g., ≤ about 400 hr⁻¹, ≤ about 300 hr⁻¹, ≤ about 200 hr⁻¹, ≤ about 100 hr⁻¹, ≤ about 50 hr⁻¹, ≤ about 10 hr⁻¹, or ≤ about 1.0 hr⁻¹. Ranges of the WHSV expressly disclosed include all combinations of any of the above-enumerated values; e.g., from about 0.1 hr⁻¹ to about 500 hr⁻¹, from about 0.5 hr⁻¹ to about 100 hr⁻¹, from about 1.0 hr⁻¹ to about 10 hr⁻¹, from about 2.0 hr⁻¹ to about 5.0 hr⁻¹, etc. In a preferred embodiment, the WHSV in the MTO riser is about 1-150 h⁻¹, e.g. about 10-100 h⁻¹ or about 20-85 h⁻¹.

In any embodiment, combinations of the above described ranges of the WHSV, temperature and pressures may be employed for the methanol conversion. For example in some embodiments, the temperature of the reaction vessel during methanol conversion may be from about 500°C to about 760°C, e.g., about 525°C to about 650°C, about 550°C to about 600°C, about 575°C to about 600°C, or at about 585°C; the WHSV may be about 1 hr⁻¹ to about 100 hr⁻¹, e.g., about 5 hr⁻¹ to about 85 hr⁻¹, about 15 hr⁻¹ to about 60 hr⁻¹, about 1.0 hr⁻¹ to about 4.0 hr⁻¹, or about 2.0 hr⁻¹ to about 3.0 hr⁻¹; and/or the pressure may be about 50 psig to about 200 psig, e.g., about 75 psig to about 150 psig or about 75 psig to about 100 psig. All combinations and permutations of these values are expressly disclosed. For example, in particular embodiments, the temperature may be about 475°C to about 500°C, the WHSV may be about 1.0 hr⁻¹ to about 4.0 hr⁻¹, and the pressure may be 75 psig to about 100 psig.

The methanol conversion catalyst may be selected from aluminosilicate zeolites and silicoaluminophosphate zeotype materials. Typically, such materials useful herein have a microporous surface area ≥ 150 m²/g, e.g., ≥ 155 m²/g, 160 m²/g, 165 m²/g, ≥ 200 m²/g, ≥ 250 m²/g, ≥ 300 m²/g, ≥ 350 m²/g, ≥ 400 m²/g, ≥ 450 m²/g, ≥ 500 m²/g, ≥ 550 m²/g, ≥ 600 m²/g, ≥ 650 m²/g, ≥ 700 m²/g, ≥ 750 m²/g, ≥ 800 m²/g, ≥ 850 m²/g, ≥ 900 m²/g, ≥ 950 m²/g, or ≥ 1000 m²/g. Additionally or alternatively, the surface area may be ≤ 1200 m²/g, e.g., ≤ 1000 m²/g, ≤ 950 m²/g, ≤ 900 m²/g, ≤ 850 m²/g, ≤ 800 m²/g, ≤ 750 m²/g, ≤ 700 m²/g, ≤ 650 m²/g, ≤ 600 m²/g, ≤ 550 m²/g, ≤ 500 m²/g, ≤ 450 m²/g, ≤ 400 m²/g, ≤ 350 m²/g, ≤ 250 m²/g, ≤ 200 m²/g, ≤ 165 m²/g, ≤ 160 m²/g, or ≤ 155 m²/g. Ranges of the surface area expressly disclosed include all combinations of any of the above-enumerated values; e.g., 150 m²/g to 1200 m²/g, 160 m²/g to about 1000 m²/g, 165 m²/g to 950 m²/g, 200 m²/g to 900 m²/g, 250 m²/g to 850 m²/g, 300 m²/g to 800 m²/g, 275 m²/g to 750 m²/g, 300 m²/g to 700 m²/g, 350 m²/g to 650 m²/g, 400 m²/g to 600 m²/g, 450 m²/g to 550 m²/g, etc.

The methanol conversion catalyst may have any ratio of silicon to aluminum. Particular catalysts have a molar ratio of silicon to aluminum ≥ about 10, e.g., ≥ about 20, ≥ about 30, ≥ about 40, ≥ about 42, ≥ about 45, ≥ about 48, ≥ about 50, ≥ about 60, ≥ about 70, ≥ about 80, ≥ about 90, ≥ about 100, ≥ about 120, ≥ about 140, ≥ about 180, or ≥ about 200. Additionally or alternatively, the methanol conversion catalyst may have a molar ratio of silicon to aluminum ≤ about 200, e.g., ≤ about 180, ≤ about 140, ≤ about 120, ≤ about 100, ≤ about 90, ≤ about 80, ≤ about 70, ≤ about 60, ≤ about 50, ≤ about 48, ≤ about 45, ≤ about 42, ≤ about 40, ≤ about 30, or ≤ about 20. Ranges of the molar ratio expressly disclosed include all combinations of any of the above-enumerated values; e.g., about 10 to about 200, about 20 to about 180, about 30 to about 140, about 40 to about 120, about 40 to about 100, about 45 to about 90, about 30 to about 50, about 42 to about 48, etc. The silicon: aluminum ratio may be selected or adjusted to provide a desired activity and/or a desired distribution of molecules from the methanol conversion.

Additionally or alternatively, particular aluminosilicate zeolites useful as methanol conversion catalysts have a hexane cracking activity (also referred to as "alpha-activity" or as "alpha value") ≥ about 5, e.g., ≥ about 10, ≥ about 20, ≥ about 40, ≥ about 60, ≥ about 80, ≥ about 100, ≥ about 160, or ≥ about 180. Additionally or alternatively, the hexane cracking activity of the methanol conversion catalyst may be ≤ about 200, e.g., ≤ about 180, ≤ about 160, ≤ about 140, ≤ about 120, ≤ about 100, ≤ about 80, ≤ about 60, ≤ about 40. Ranges of the alpha values expressly disclosed include all combinations of any of the above-enumerated values; e.g., ∼50 to ∼200, ∼10 to ∼180, ∼20 to ∼160, ∼40 to ∼140, ∼60 to ∼120, etc. Hexane cracking activity according to the alpha test is described in U.S. Patent No. 3,354,078; in the Journal of Catalysis at vol. 4, p. 527 (1965), vol. 6, p. 278 (1966), and vol. 61, p. 395 (1980), each incorporated herein by reference as to that description. The experimental conditions of the test used herein include a constant temperature of about 538°C and a variable flow rate as described in detail in the Journal of Catalysis at vol. 61, p. 395. Higher alpha values typically correspond to a more active cracking catalyst. In a preferred embodiment, the alpha activity, α, is 5-130, e.g. 10, 25, 75, or 130.

Aluminosilicate zeolites useful as methanol conversion catalyst may be characterized by an International Zeolite Associate (IZA) Structure Commission framework type selected from the group consisting of BEA, CHA, EUO, FER, IMF, LAU, MEL, MFI, MRE, MFS, MTT, MWW, NES, TON, SFG, STF, STI, TUN, PUN, and combinations and intergrowths thereof.

Particular examples of suitable methanol conversion catalysts can include ZSM-5, ZSM-11, ZSM-12, ZSM-22, ZSM-23, ZSM-35, and ZSM-48 as well as combinations thereof. Particularly useful catalysts can include zeolites having an MRE-type IZA framework, e.g., ZSM-48 catalyst, particularly where improved conversion to distillate is desired. Other particularly useful catalysts may include zeolites having an MFI-type IZA framework, e.g., H-ZSM-5 catalyst, particularly for distillate feeds, provided the catalyst has been steamed as is known in the art. In some embodiments, the catalyst may include or be ZSM-12. Catalyst activity may be modified, e.g., by use of catalysts that are not fully exchanged. Activity is also known to be affected by the silicon: aluminum ratio of the catalyst. For example, catalysts prepared to have a higher silica: aluminum ratio can tend to have lower activity. The person of ordinary skill will recognize that the activity can be modified to give the desired low aromatic product in methanol conversion.

Zeolite ZSM-5 and the conventional preparation thereof are described in U.S. Patent No. 3,702,886. Zeolite ZSM-11 and the conventional preparation thereof are described in U.S. Patent No. 3,709,979. Zeolite ZSM-12 and the conventional preparation thereof are described in U.S. Patent No. 3,832,449. Zeolite ZSM-23 and the conventional preparation thereof are described U.S. Patent No. 4,076,842. Zeolite ZSM-35 and the conventional preparation thereof are described in U.S. Patent No. 4,016,245. ZSM-48 and the conventional preparation thereof are taught by U.S. Patent No. 4,375,573. The entire disclosures of these U.S. patents are incorporated herein by reference.

Exemplary silicoaluminophosphates that may be useful herein can include one or a combination of SAPO-5, SAPO-8, SAPO-11, SAPO-16, SAPO-17, SAPO-18, SAPO-20, SAPO-31, SAPO-34, SAPO-35, SAPO-36, SAPO-37, SAPO-40, SAPO-41, SAPO-42, SAPO-44, SAPO-47, and SAPO-56.

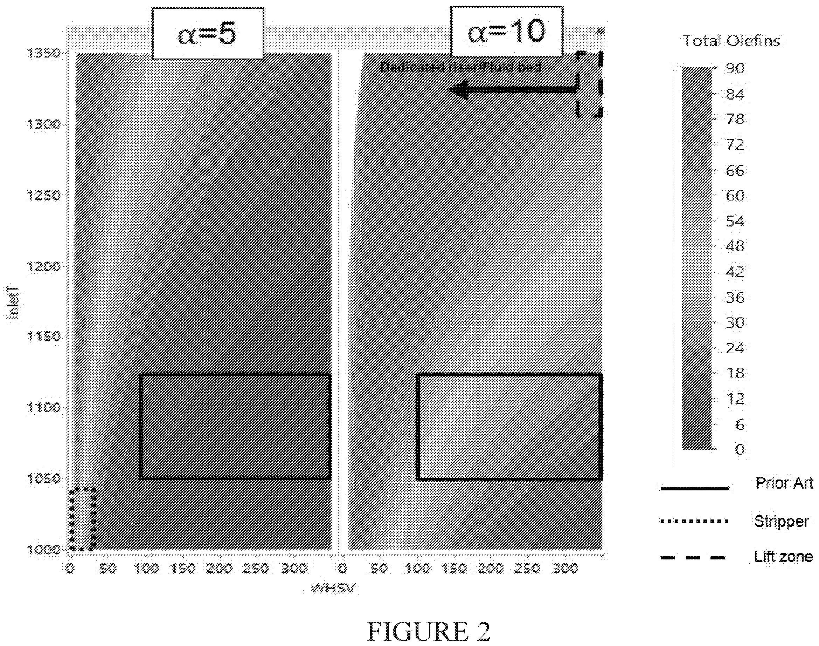

Figure 2 provides a model-based prediction of potential methanol to olefin conversion prediction using a second dedicated riser in a FCC unit. Olefin yield predictions were generated based on a detailed kinetic model that discretely tracks >100 individual species. The model was originally developed and tuned with large and detailed data sets to support methanol to gasoline catalyst and process development, of which the relevant reactions here are a subset. For the sake of simplicity here, the model utilized isothermal conditions and assumed plug flow of catalyst and feed which was simulated as a fixed-bed. The large "Prior Art" box depicts the conversion rate hypothesized to be disclosed in the Pan et al. reference discussed above. This is based on the temperature ranges and olefin production disclosed in the reference. The small dashed box in Figure 2 predicts MTO conversion if methanol was added to the stripper section of an existing FCC unit. The large dashed box in Figure 2 predicts the MTO conversion if methanol was simply introduced with the heavy oil feed to the lift zone of a single riser FCC unit. As shown, the addition of a dedicated MTO riser in an existing FCC unit allows the user to optimize parameters, (alpha-activity, temperature, and WHSV shown) to maximize MTO conversion. Table 1 below shows a comparison of predicted olefin yields between using a single riser at conventional FCC conditions and a dedicated MTO riser on the FCC unit so that MTO conversion can be maximized.

| **Predicted Olefin Yields (wt. %)** | | |
|---|---|---|
| **Temperature (°C)** | **Single Riser (α=10, WHSV=350 h⁻¹)** | **Dedicated MTO Riser (α=10, WHSV as listed)** |
| 538 | 8 | 83 @ 14.5 h⁻¹ |
| 593 | 21 | 86 @ 28.5 h⁻¹ |
| 649 | 40 | 87 @ 56.5 h⁻¹ |
| 704 | 59 | 89 @ 84.5 h⁻¹ |

As shown, the ability to tailor the dedicated MTO riser conditions allows for greater methanol to olefin yield at different temperatures, activities, and space velocities.

## Claims

1. A dual riser fluid catalytic cracking process, comprising:
cracking a hydrocarbon feed in a first riser comprising a first catalyst under first riser conditions to form a first effluent enriched in olefins, light gasoil, gasoline, or a combination thereof;
cracking a hydrocarbon oxygenate feed in a second riser comprising a second catalyst under second riser conditions to form a second effluent enriched in olefins;
recovering the first and second catalyst from the first and second effluents in a common reactor; regenerating the recovered first and second catalyst in a regenerator using heat from the exothermic cracking of the hydrocarbon oxygenate feed; and
recirculating the regenerated first and second catalyst to the first and second riser; wherein the first catalyst and the second catalysts have different densities such that they form a layer of first catalyst and a layer of second catalyst in the regenerator; wherein recirculating the regenerated first and second catalyst to the first and second riser further comprises positioning a first riser standpipe to recirculate regenerated first catalyst to the first riser from the layer of first catalyst; and positioning a second riser standpipe to recirculate a regenerated second catalyst to the second riser from the layer of second catalyst.

2. The process of claim 1, wherein the hydrocarbon oxygenate feed includes methanol.

3. The process of any of the previous claims, wherein the second riser conditions include a catalyst activity, α, of about 5 to 130, the catalyst activity α being the hexane cracking activity, which is determined as defined in the description.

4. The process of any of the previous claims, wherein the catalyst activity, α, is about 10.

5. The process of any of the previous claims, wherein the second riser conditions include a weight hourly space velocity (WHSV) of about 1-150 h⁻¹.

6. The process of any of the previous claims, wherein the weight hourly space velocity (WHSV) is about 10-100 h⁻¹.

7. The process of any of the previous claims, wherein the weight hourly space velocity (WHSV) is about 20-85 h⁻¹.

8. The process of any of the previous claims, wherein the second riser conditions include a temperature of 538-760 °C and a weigh hourly space velocity (WHSV) of about 20-85 h⁻¹.

9. The process of any of the previous claims, wherein the first catalyst is a USY catalyst and the second catalyst is ZSM-5, ZSM-11, ZSM-48, or a combination thereof.

## Patentansprüche

1. Katalytisches Crackverfahren mit Doppelsteigflüssigkeit, das umfasst:
Cracken eines Kohlenwasserstoff-Einsatzmaterials in einem ersten Steigrohr, das einen ersten Katalysator umfasst, unter Bedingungen des ersten Steigrohrs, um ein erstes Austrittsmaterial zu bilden, das mit Olefinen, leichtem Gasöl, Benzin oder einer Kombination davon angereichert ist;
Cracken eines Kohlenwasserstoffoxygenat-Einsatzmaterials in einem zweiten Steigrohr, das einen zweiten Katalysator umfasst, unter Bedingungen des zweiten Steigrohrs, um ein zweites Austrittsmaterial zu bilden, das mit Olefinen angereichert ist;
Rückgewinnung des ersten und zweiten Katalysators aus den ersten und zweiten Austrittsmaterialien in einem gemeinsamen Reaktor; Regenerieren des zurückgewonnenen ersten und zweiten Katalysators in einem Regenerator unter Verwendung von Wärme aus dem exothermen Cracken des Kohlenwasser-stoffoxygenat-Einsatzmaterials; und
Zurückführen des regenerierten ersten und zweiten Katalysators zum ersten und zweiten Steigrohr;
wobei der erste Katalysator und der zweite Katalysator unterschiedliche Dichten aufweisen, so dass sie im Regenerator eine Schicht des ersten Katalysators und eine Schicht des zweiten Katalysators bilden; wobei das Zurückführen des regenerierten ersten und zweiten Katalysators zum ersten und zweiten Steigrohr ferner das Positionieren eines ersten Steigstandrohrs umfasst, um den regenerierten ersten Katalysator von der Schicht des ersten Katalysators zum ersten Steigrohr zurückzuführen;
und Positionieren eines zweiten Steigstandrohrs, um einen regenerierten zweiten Katalysator aus der Schicht des zweiten Katalysators zum zweiten Steigrohr zurückzuführen.

2. Verfahren nach Anspruch 1, bei dem das Kohlenwasserstoffoxygenat-Einsatzmaterial Methanol enthält.

3. Verfahren nach einem der vorhergehenden Ansprüche, bei dem die Bedingungen des zweiten Steigrohrs eine Katalysatoraktivität α von etwa 5 bis 130 umfassen, wobei die Katalysatoraktivität α die Hexan-Crackaktivität ist, die bestimmt wird, wie es in der Beschreibung definiert ist.

4. Verfahren nach einem der vorhergehenden Ansprüche, bei dem die Katalysatoraktivität α etwa 10 beträgt.

5. Verfahren nach einem der vorhergehenden Ansprüche, bei dem die Bedingungen des zweiten Steigrohrs eine gewichtsstündliche Raumgeschwindigkeit (WHSV) von etwa 1-150 Stunde⁻¹ umfassen.

6. Verfahren nach einem der vorhergehenden Ansprüche, bei dem die gewichtsstündliche Raumgeschwindigkeit (WHSV) etwa 10-100 Stunde⁻¹ beträgt.

7. Verfahren nach einem der vorhergehenden Ansprüche, bei dem die gewichtsstündliche Raumgeschwindigkeit (WHSV) etwa 20-85 Stunde⁻¹ beträgt.

8. Verfahren nach einem der vorhergehenden Ansprüche, bei dem die Bedingungen des zweiten Steigrohrs eine Temperatur von 538-760°C und eine gewichtsstündliche Raumgeschwindigkeit (WHSV) von etwa 20-85 Stunde⁻¹ umfassen.

9. Verfahren nach einem der vorhergehenden Ansprüche, bei dem der erste Katalysator ein USY-Katalysator ist und der zweite Katalysator ZSM-5, ZSM-11, ZSM-48 oder eine Kombination davon ist.

## Revendications

1. Procédé de craquage catalytique en lit fluidisé à double colonne montante, comprenant :
le craquage d'une charge d'hydrocarbures dans une première colonne montante comprenant un premier catalyseur dans des conditions de première colonne montante pour former un premier effluent enrichi en oléfines, en gazole léger, en essence ou en une combinaison de ceux-ci ;
le craquage d'une charge de composés oxygénés hydrocarbonés dans une seconde colonne montante comprenant un second catalyseur dans des conditions de seconde colonne montante pour former un second effluent enrichi en oléfines ;
la récupération des premier et second catalyseurs à partir des premier et second effluents dans un réacteur commun ;
la régénération des premier et second catalyseurs récupérés dans un régénérateur à l'aide de chaleur provenant du craquage exothermique de la charge de composés oxygénés hydrocarbonés ; et
la recirculation des premier et second catalyseurs régénérés vers les première et seconde colonnes montantes ; dans lequel le premier catalyseur et le second catalyseur ont des densités différentes de façon telle qu'ils forment une couche de premier catalyseur et une couche de second catalyseur dans le régénérateur ; dans lequel la recirculation des premier et second catalyseurs régénérés vers les première et seconde colonnes montantes comprend en outre la mise en place d'un premier tuyau de refoulement vers la colonne montante pour faire recirculer du premier catalyseur régénéré vers la première colonne montante à partir de la couche de premier catalyseur ; et la mise en place d'un second tuyau de refoulement vers la colonne montante pour faire recirculer un second catalyseur régénéré vers la seconde colonne montante à partir de la couche de second catalyseur.

2. Procédé selon la revendication 1, dans lequel la charge de composés oxygénés hydrocarbonés renferme du méthanol.

3. Procédé selon l'une quelconque des revendications précédentes, dans lequel les conditions de seconde colonne montante incluent une activité de catalyseur, α, d'environ 5 à 130, l'activité de catalyseur α étant l'activité de craquage d'hexane, qui est déterminée comme défini dans la description.

4. Procédé selon l'une quelconque des revendications précédentes, dans lequel l'activité de catalyseur, α, est d'environ 10.

5. Procédé selon l'une quelconque des revendications précédentes, dans lequel les conditions de seconde colonne montante incluent une vitesse spatiale horaire en poids (WHSV) d'environ 1-150 h⁻¹.

6. Procédé selon l'une quelconque des revendications précédentes, dans lequel la vitesse spatiale horaire en poids (WHSV) est d'environ 10-100 h⁻¹.

7. Procédé selon l'une quelconque des revendications précédentes, dans lequel la vitesse spatiale horaire en poids (WHSV) est d'environ 20-85 h⁻¹.

8. Procédé selon l'une quelconque des revendications précédentes, dans lequel les conditions de seconde colonne montante incluent une température de 538-760 °C et une vitesse spatiale horaire en poids (WHSV) d'environ 20-85 h⁻¹.

9. Procédé selon l'une quelconque des revendications précédentes, dans lequel le premier catalyseur est un catalyseur USY et le second catalyseur est ZSM-5, ZSM-11, ZSM-48 ou une combinaison de ceux-ci.
